# EUROPEAN PATENT SPECIFICATION

(11) **EP 3 077 285 B1**
(45) Date of publication and mention of the grant of the patent: **07.08.2019**
(21) Application number: 14828552.1
(22) Date of filing: 07.11.2014
(51) Int. Cl.: B64C 31/06

(54) **ARC-SHAPED WING WITH DIFFERENTIATED WING PROFILES**
BOGENFÖRMIGER FLÜGEL MIT GESTRAKTEM PROFILVERLAUF
AILE EN FORME D'ARC À PROFILS ÉVOLUANT D'UNE SECTION CENTRALE VERS UNE SECTION LATÉRALE

(30) Priority: 04.12.2013 IT TO20130987
(43) Date of publication of application: 12.10.2016
(73) Proprietor: Kite Gen Research S.R.L., 10099 San Mauro Torinese (TO) (IT)
(72) Inventor: IPPOLITO, Massimo, I-10099 San Mauro Torinese (TO) (IT)
(74) Representative: Garavelli, Paolo
(86) International application number: PCT/IT2014/000296
(87) International publication number: WO 2015/083189

(56) References cited:
- WO-A1-01/58755
- WO-A1-2004/048192
- US-A1- 2009 045 291

## Description

The present invention refers to an arc-shaped wing with differentiated wing profiles.

An arc-shaped wing falls within systems for extracting energy from wing through ultra-light wings, with high aerodynamic efficiency, subjected to high wing loads, in tensile structure mode.

The terms used in this document have the following meaning:
- attack angle, is the angle between the wing cord of any aerodynamic profile and the apparent wind. For an arc-shaped wing the global attack angle is generally considered as the angle between the apparent wind and the mean line of the aerodynamic cord profiles in the central span section;
- pressure center, is the point in which all aerodynamic forces generated by an aerodynamic profile can be considered as acting. For wing profiles of an arc-shaped wing, the pressure center is between 10% and 20% of the cord;
- cord line, is a line traced through the wing section from the front edge to the outlet edge;
- aerodynamic efficiency L/D, is the ratio between lift forces L and drag forces D at a given wind speed;
- load line for an arc-shaped wing, is the line from tip to tip passing by the pressure center of all sections composing the wing;
- heading up: it is the trend of the attack angle of an arc-shaped wing to become suddenly negative;
- stall resistance: it is advisable that arc-shaped wings have low stall speeds and that they can recover a possible stall with minimum increase of the apparent wind;
- wing sliding attitude: flight condition in which the arc-shaped wing flies under an oblique attack situation;
- productive attitude: flight condition in which the arc-shaped wing is able to perform its work.

An arc-shaped wing is subjected only to pure tensional efforts to generate an aerodynamic lift useful, at the same time, both to keep its own shape and to generate energy.

The aerodynamic lift depends on the shape of the wing profile and on the attack angle slanting.

According to document WO2007133724, an energy generating system is based on a certain wing profile. In particular, a wing profile is composed of a rounded and tapered front edge and of an outlet edge, wherein said attack edge is thicker than said outlet edge. Alternatively, a wing profile is composed of a sharp front edge and of an outlet edge, wherein said attack edge is thicker than said outlet edge.

An arc-shaped wing composed of a wing profile equipped with a sharp front edge has the advantage of increasing the maneuver capabilities, especially in the wing sliding phase.

An arc-shaped wing composed of a wing profile equipped with a sharp front edge has also the problem of a non-homogeneous distribution of the attack angle along the global wing front; the attack angle in fact tends to be nullified next to the two lateral shoulders with the consequent risk of yawing the wing due to an asymmetrical distribution of the resistance along the arc itself.

The shape of these wings is approximately semi-circular in the plane perpendicular to the apparent wind direction. The circumferential tension implies a radial component acting in all its points towards the rated center of the arc-shaped wing. Next to the lateral bands, where the attack angle is null, these radial forces cause the wing to collapse.

The problem of the wing shoulder collapse has been dealt with in EP-A-0023137, wherein a wing is disclosed, which is equipped with stiffening means capable of keeping the wing profile substantially unchanged next to the two lateral ends.

Document WO-A1-01/58755 discloses an arc-shaped wing according to the preamble of Claim 1.

Object of the present invention is solving the above prior art problems, by providing an arc-shaped wing composed of a wing profile equipped with a sharp front edge capable of keeping the wing profile substantially unchanged next to the two lateral ends without the help of structural stiffening means.

Another object of the present invention is providing an arc-shaped wing with high aerodynamic efficiency, composed of a section of central arc connected to a pair of bridles through two shoulders, with the section of central arc being based on a wing profile composed of a tapered section, next to the front edge, and of a thin section, next to the outlet edge, each shoulder being based on a carrier profile composed of a tapered section.

The above and other objects and advantages of the present invention, as will result from the following description, are obtained with an arc-shaped wing as claimed in claim 1.

The present invention will be better described by some preferred embodiments thereof, provided as a non-limiting example, with reference to the enclosed drawings, in which:
- Figure 1 shows a diagram of wing profiles from figure 5 of prior document WO2007133724;

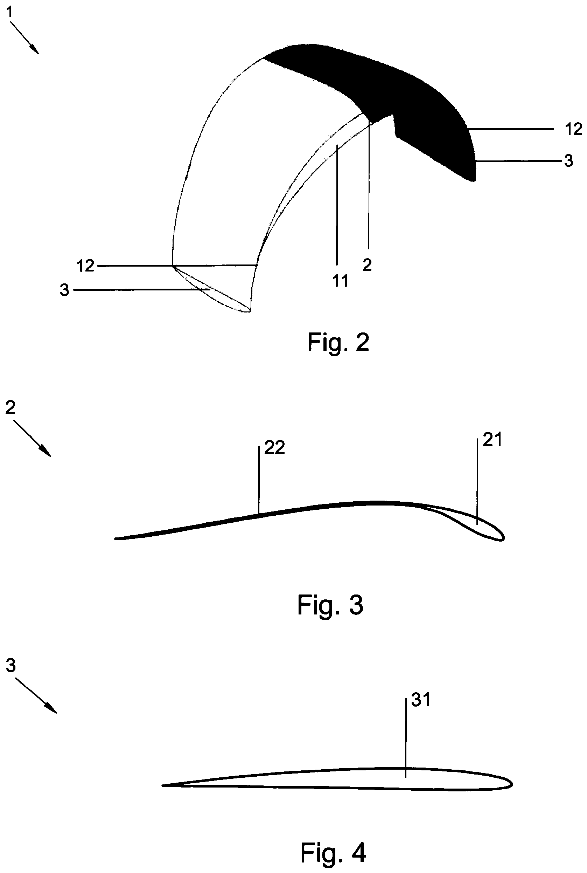

- Figure 2 shows a top perspective view of a preferred embodiment of an arc-shaped wing according to the present invention;
- Figure 3 shows a sectional view of a front edge of the wing according to the present invention of the FIG. 2; and
- Figure 4 shows a sectional view of a carrier wing profile of the wing according to the present invention of Figure 2.

The arc-shaped wing 1 according to the present invention is composed of a section of central arc 11 and of two lateral shoulders 12 connected, for example, to pairs of bridles (not shown).

Advantageously, such central arc 11 is composed of a first wing profile 2 and each one of such shoulders 12 is composed of a second wing profile 3.

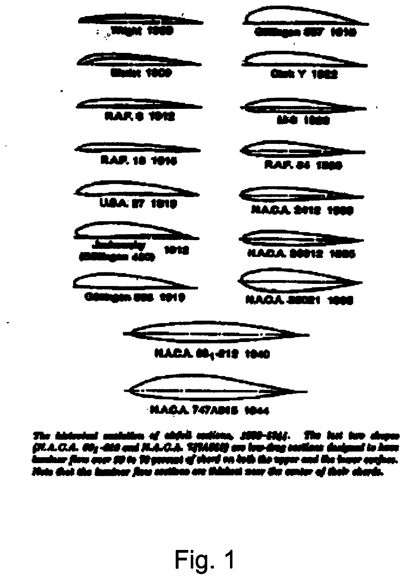

The section of central arc 11 comprises a first wing profile 2 composed of a rounded and tapered front attack edge 21 and of an outlet edge 22, wherein the attack edge 21 is thicker than the outlet edge 22. The first wing profile 2 can be of the "Wright 1908" type of Figure 1 or of the EPPLER 377/376 type.

Each shoulder 12 is composed of a second carrier wing profile 3 whose area is occupied by a tapered section 31. The second wing profile 3 is of the "N.A.C.A. 4412" type.

The arc-shaped wing 1 satisfies the double purpose of ensuring a certain maneuver capability during the wing sliding phase, due to the shape of the first wing profile 2, and keeping the lateral shoulders 12 tensioned, due to the carrier shape of the second carrier profile 3.

The wing profiles 2, 3 are gradually and symmetrically arranged with respect to a central axis of the wing 1 and, consequently, the arc-shaped wing 1 is made through a symmetrical distribution of the first wing profile 2 ending laterally with the secondi wing profiles 3, connecting such profiles 2, 3 through respective gradual transition areas.

The arc-shaped wing 1 does not need additional structural or reinforcing elements for keeping the lateral shoulders 12 tensioned, due to a carrier force ensured by the second wing profile 3.

## Claims

1. Arc-shaped wing (1) with differentiated wing profiles, composed of a section of central arc (11) and two lateral shoulders (12), said central arc (11) being composed of a first wing profile (2) and each one of said shoulders (12) being composed of a second wing profile (3), **characterized in that** said first wing profile (2) is of the "Wright 1908" or EPPLER 377/376 type, and **in that** said second wing profile (3) is of the "N.A.C.A. 4412" type, said wing profiles (2, 3) being gradually and symmetrically arranged with respect to a central axis of said wing (1), said arc-shaped wing (1) being made in tensile structure mode without interruptions, the section of local wing profile along the coverage of the arc-shaped wing (1) being obtained through a transition of the section of the first wing profile (2) into the section of the second wing profile (3).

## Patentansprüche

1. Bogenförmiger Flügel (1) mit differenzierten Flügelprofilen, die aus einem mittleren bogenförmigen Abschnitt (11) und zwei seitlichen Schultern (12) geformt sind, der genannte mittlere Bogen (11) ist aus einem ersten Flügelprofil (2) geformt, und jede der genannten Schultern (12) ist aus einem zweiten Flügelprofil (3) geformt, **der dadurch gekennzeichnet ist, dass** das genannte erste Flügelprofil (2) ein "Wright 1908" oder EPPLER 377/376 ist, und dadurch, dass das genannte zweite Flügelprofil (3) ein "N.A.C.A. 4412" ist, die genannten Flügelprofile (2, 3) sind stufenweise und symmetrisch gegenüber einer mittleren Achse des genannten Flügels (1) verteilt, der genannte bogenförmige Flügel (1) wird in nahtloser Spannstruktur-Modalität hergestellt, der Abschnitt des lokalen bogenförmigen Flügels (1) wird durch einen Übergang vom Abschnitt des ersten Flügelprofils (2) auf den Abschnitt des zweiten Flügelprofils (3) erhalten.

## Revendications

1. Aile en arc (1) à profils alaires différentiés, formée d'un morceau d'arc central (11) et de deux épaulements latéraux (12) ; l'arc central (11) est formé par un premier profil alaire (2) et chaque épaulement (12) est formé par un second profil alaire (3), **caractérisée en ce que** le premier profil alaire (2) est du type « Wright 1908 » ou EPPLER 377/376, et que le second profil alaire (3) est du type «N.A.C.A. 4412» ; les profils alaires (2, 3) sont distribués graduellement et symétriquement par rapport à un axe central de l'aile (1) ; l'aile en arc (1) est réalisée en tensostructure sans solution de continuité ; la section de profil alaire local le long de la couverture de l'aile en arc (1) est obtenue à travers une transition de la section du premier profil alaire (2) dans la section du second profil alaire (3).
